# EUROPÄISCHE PATENTSCHRIFT

(11) **EP 2 542 641 B1**
(45) Veröffentlichungstag und Bekanntmachung des Hinweises auf die Patenterteilung: **17.08.2016**
(21) Anmeldenummer: 11706169.7
(22) Anmeldetag: 18.02.2011
(51) Int. Cl.: C09K 5/10, C09K 5/20, C23F 11/14

(54) **BIOLOGISCH ABBAUBARE, FROSTSICHERE WÄRMETRÄGERFLÜSSIGKEIT, IHRE VERWENDUNG IN OBERFLÄCHENNAHEN, GEOTHERMISCHEN ANLAGEN, UND EIN KONZENTRAT ZU IHRER HERSTELLUNG**
BIODEGRADABLE, FROST PROOF HEAT-TRANSFER FLUID, USE THEREOF IN NEAR-SURFACE GEOTHERMAL INSTALLATIONS, AND A CONCENTRATE FOR PREPARING SAME
LIQUIDE CALOPORTEUR BIODÉGRADABLE RÉSISTANT AU GEL, SON UTILISATION DANS DES INSTALLATIONS GÉOTHERMIQUES PROCHES DE LA SURFACE, ET CONCENTRÉ POUR SA FABRICATION

(30) Priorität: 05.03.2010 DE 102010010408
(43) Veröffentlichungstag der Anmeldung: 09.01.2013
(73) Patentinhaber: CLARIANT INTERNATIONAL LTD, 4132 Muttenz (CH)
(72) Erfinder: WAIDELICH, Michael, 63755 Alzenau (DE); STANKOWIAK, Achim, 84503 Altötting (DE); SCHUSTER, Johann, 84556 Kastl (DE); UNTERHASLBERGER, Martina, 84524 Neuötting (DE); DRONIA, Sabine, 84556 Kastl (DE)
(74) Vertreter: Mikulecky, Klaus
(86) Internationale Anmeldenummer: PCT/EP2011/000790
(87) Internationale Veröffentlichungsnummer: WO 2011/107220

(56) Entgegenhaltungen:
- EP-A1- 0 025 011
- DE-A1- 2 940 258
- DE-A1- 10 313 280
- DE-C1- 19 830 493
- US-A- 5 085 793
- US-A1- 2008 315 152

## Beschreibung

Die vorliegende Erfindung betrifft Wärmeträgerflüssigkeiten, die in oberflächennahen, geothermischen Anlagen verwendet werden, die bei Temperaturen unterhalb des Gefrierpunktes nicht einfrieren, die einen zuverlässigen Korrosionsschutz bieten und die leicht biologisch abbaubar sind.

Die Anzahl der oberflächennahen, geothermischen Anlagen nimmt zu, da sie eine ökologisch sinnvolle Alternative zur Wärmegewinnung sind. Diese Technologie ist mittlerweile ausgereift und auch ökonomisch betrachtet eine gute Alternative zu konventionellen Systemen, die zur Wärmegewinnung Öl, Gas oder andere fossile Brennstoffe verwenden.

Mit der Zahl der oberflächennahen, geothermischen Anlagen wächst auch die Gefahr, dass bei Leckagen des Systems das Wärmeträgermedium in das Erdreich gelangt und dort ökologische Schäden anrichtet. Die häufig als Bestandteil des Wärmeträgermediums eingesetzten Glykole (Ethylenglykol oder Propylenglykol) weisen eine gute biologische Abbaubarkeit auf, was in Studien gezeigt wurde (Geothermics 36 (2007) 348 - 361). Unter guter biologischer Abbaubarkeit sollen Abbaubarkeiten, die nach den OECD-Methoden bestimmt wurden, verstanden werden.

Ohne die Zugabe eines Frostschutzadditivs zur Wärmeträgerflüssigkeit, wie z. B. ein Glykol, ist die Effizienz einer oberflächennahen, geothermischen Anlage meist stark eingeschränkt bzw. es müssen in der Folge tiefere Bohrungen stattfinden um denselben Wärmeeintrag zu erhalten, wenn Wasser Bestandteil des Wärmeträgers ist. Die tieferen Bohrungen ins Erdreich sind ökologisch und ökonomisch zweifelhaft. Zudem sind die neuen Wärmepumpen, die in diesem Bereich eingesetzt werden, zum Teil so effizient, dass die Temperatur des Wärmeträgermediums, nachdem ihm die Energie in der Wärmepumpe entzogen wurde, bei Eintritt in das Erdreich unterhalb des Nullpunktes liegt und somit ein Frostschutz benötigt wird.

Mehr und mehr gelangen jedoch auch die eingesetzten Korrosionsschutz-Additive in den Fokus der Umweltverträglichkeitsprüfung. Um einen guten und ausreichenden Korrosionsschutz und einen einwandfreien Betrieb des Systems gewährleisten zu können, müssen Korrosionsschutz-Additive beigegeben werden. Ohne diese Additive steigt die Leckagewahrscheinlichkeit signifikant an und Korrosionsprodukte, wie z. B. Metallionen, könnten in den Boden gelangen. Die eingesetzten Frostschutzadditive erhöhen das Korrosionsrisiko zudem noch. Die häufig eingesetzten Glykole bilden durch Oxidation mit der Zeit organische Säuren, welche stark korrosionsfördernd wirken.

Nach heutigem Stand der Technik werden regelmäßig Korrosionschutz-Additive eingesetzt, deren biologische Abbaubarkeit gering ist, beispielsweise Benztriazol. Dieses ist in Flugzeug- und Landebahnenteisungsmitteln, die im größeren Umfang in die Umwelt gelangen können, bereits heute nicht mehr behördlich zulässig.

Als Korrosionsinhibitoren kommen in gebrauchsfertigen Wärmeträgerflüssigkeiten beispielsweise auch Amine (oft gewässerschädigend bzw. fischtoxisch) zum Einsatz, deren Auswirkungen auf die Umwelt auch als schädigend einzustufen sind.

Biologisch abbaubare Korrosionsinhibitoren sind beispielsweise aus US-5785895 bekannt, wo ein biologisch abbaubares Imidazol beschrieben wird.

In US 7060199 wird eine biologisch abbaubare Funktionsflüssigkeit für mechanische Antriebe, speziell Dampfmotoren beschrieben.

DE-A-198 30 493 beschreibt einen Wärmeträger für Solaranlagen, der Glykole und Korrosionsinhibitoren enthält.

US-2008/315152 lehrt eine Wärmeträgerflüssigkeit für geothermische Anlagen mit einem Gehalt an Korrosionsinhibitor von 4 - 20 ppm. Dieser ist zu niedrig, um eine Wärmeträgerflüssigkeit für geothermische Anlagen mit hinreichender Stabilität und Standzeit herzustellen.

DE-A-2940258 lehrt hartwasserstabile Korrosionsschutzmittel bestehend aus einem Alkalimetall-, Erdalkalimetall- oder -Aminsalz einer Verbindung der Formel 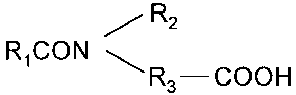 wobei
R₁ verzweigtes C₆-C₁₃-Alkyl, C₅- oder C₆-Cycloalkyl, durch 1 oder 2 C₁-C₄-Alkylgruppen substituiert sein können, oder Polycycloalkyl mit 6 bis 13 C-Atomen,
R₂ Wasserstoff oder C₁-C₆-Alkyl und
R₃ C₁-C₁₁ Alkylen in gerader oder verzweigter Kette bedeuten.

DE-A-10313280 lehrt ein Gefrierschutzmittelkonzentrat auf Basis von Alkylenglykol, Glycerin und/oder 1,3-Propandiol, enthaltend
a) 0,05 bis 10 Gew.-%, vorzugsweise 0,5 bis 5 Gew.-% bezogen auf die Gesamtmenge des Konzentrates eines oder mehrerer Polyethylen- und/oder Polypropylenglykole und
b) 0,01 bis 10 Gew.-% vorzugsweise 0,05 bis 10 Gew.-%, bezogen auf die Gesamtmenge des Konzentrates eines oder mehrerer Carbonsäureamide und/oder Sulfonsäureamide.

EP-A-0025011 lehrt eine flüssige Wärmeträgerzubereitung, enthaltend
a) 25 Gew.-% Polyethylenglykol, das ein Molekulargewicht von 180 bis 250 und einen Stockpunkt, gemessen nach DIN 51 583, von -50 ± 3 °C aufweist;
b) 20 ± 1 Gew.-% 1,2-Propylenglykol;
c) 10 bis 1000 ppm Polyethylenoxid, das ein Molekulargewicht von 4 bis 6·10⁶ aufweist, und
d) etwa 50 Gew.-% entsalztes Wasser.

US-5085793 lehrt die Verwendung, in einer Gefrierschutzmittelzusammensetzung, die ein Gefrierpunktserniedrigungsmittel aus einem flüssigen Alkohol umfasst, wenigstens einer Hydroxyl-substituierten aromatischen Mono- oder Dicarbonsäure, wobei bei besagter Säure der Hydroxyl-Rest nahe zu dem Carboxyl-Rest angeordnet ist, für die Inhibition der Korrosion von Lot mit hohem Bleigehalt und wobei, wenn die primären und sekundären Carboxyl-Gruppen nahe zueinander angeordnet sind, das OH-Segment (CO[OH]) einer der Gruppen als eine Hydroxyl-Gruppe angesehen werden soll.

In US-7241391 wird eine Formulierung zur Verhinderung von Kalkablagerungen offenbart, die biologisch abbaubare Korrosionsschutzinhibitoren und Kalkdispergatoren enthält, welche in rein wasserführenden Systemen eingesetzt werden sollen.

Aufgabe der vorliegenden Erfindung war es, Wärmeträgerflüssigkeiten zu finden, die eine leichte biologische Abbaubarkeit aufweisen und damit für die Verwendung in oberflächennahen, geothermischen Anlagen geeignet sind, und die einen ausreichenden Korrosionsschutz gewährleisten.

Gegenstand der Erfindung ist daher die Verwendung einer triazolfreien Zusammensetzung, die neben Wasser
a) 9,2 bis 49,5 Gew.-% mindestens eines C₂- bis C₃-Alkylenglykols, eines C₂- bis C₃-Polyalkylenglykols oder Glycerin,
b) 0,1 bis 4 Gew.-% mindestens eines Korrosionsinhibitors, worin der Korrosionsinhibitor ein Alkalimetall-, Erdalkalimetall- oder Aminsalz einer Verbindung der Formel 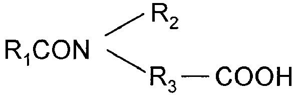 ist, wobei
   - R₁: verzweigtes C₆-C₁₃-Alkyl, oder C₅- oder C₆-Cycloalkyl oder Polycycloalkyl mit 6 bis 13 C-Atomen, die durch eine oder zwei C₁-C₄-Alkylgruppen substituiert sein können,
   - R₂: Wasserstoff oder C₁-C₆-Alkyl und
   - R₃: C₁-C₁₁-Alkylen in gerader oder verzweigter Kette bedeuten,
   enthält, mit den Maßgaben, dass
c) die Zusammensetzung nach der Testmethode OECD 301 A biologisch gut abbaubar ("ready degradable") ist,
d) die Zusammensetzung nach der Testmethode OECD 311 eine anaerobe biologische Abbaubarkeit von mindestens 75 % aufweist,
e) der Korrosionsinhibitor oder sämtliche eingesetzten Korrosionsinhibitoren nach OECD 301 A (für wasserlösliche Korrosionsinhibitoren) bzw. OECD 301 B (für schlecht wasserlösliche Korrosionsinhibitoren) biologisch gut abbaubar ("ready degradable") sind,

in oberflächennahen, geothermischen Anlagen als Wärmeträgerflüssigkeit.

Weiterer Gegenstand der Erfindung ist eine triazolfreie Wärmeträgerflüssigkeit für oberflächennahe, geothermische Anlagen, enthaltend Wasser und
a) 9,2 bis 49,5 Gew.-% mindestens eines C₂- bis C₃-Alkylenglykols, eines C₂- bis C₃-Polyalkylenglykols oder Glycerin,
b) 0,1 bis 4 Gew.-% mindestens eines Korrosionsinhibitors, worin der Korrosionsinhibitor ein Alkalimetall-, Erdalkalimetall- oder Aminsalz einer Verbindung der Formel 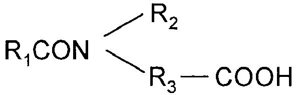 ist, wobei
   R₁ verzweigtes C₆-C₁₃-Alkyl, oder C₅- oder C₆-Cycloalkyl oder Polycycloalkyl mit 6 bis 13 C-Atomen, die durch eine oder zwei C₁-C₄-Alkylgruppen substituiert sein können,
   R₂ Wasserstoff oder C₁-C₆-Alkyl und
   R₃ C₁-C₁₁-Alkylen in gerader oder verzweigter Kette bedeuten,
   mit den Maßgaben, dass
c) die Wärmeträgerflüssigkeit nach der Testmethode OECD 301 A biologisch gut abbaubar ("ready degradable") ist,
d) die Wärmeträgerflüssigkeit nach der Testmethode OECD 311 eine anaerobe biologische Abbaubarkeit von mindestens 75 % aufweist,
e) der Korrosionsinhibitor oder sämtliche eingesetzten Korrosionsinhibitoren nach OECD 301 A (für wasserlösliche Korrosionsinhibitoren) bzw. OECD 301 B (für schlecht wasserlösliche Korrosionsinhibitoren) biologisch gut abbaubar ("ready degradable") sind.

Weiterer Gegenstand der Erfindung ist ein triazolfreies Wärmeträgerkonzentrat für die Herstellung einer Wärmeträgerflüssigkeit, welches
a) 92,4 bis 98,9 Gew.-% mindestens einen C₂- bis C₃-Alkylenglykols, einen C₂- bis C₃-Polyalkylenglykols oder Glycerin,
b) 1,1 bis 7,6 Gew.-% mindestens eines Korrosionsinhibitors, worin der Korrosionsinhibitor ein Alkalimetall-, Erdalkalimetall- oder Aminsalz einer Verbindung der Formel 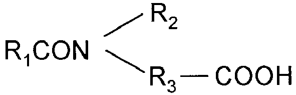 ist, wobei
   R₁ verzweigtes C₆-C₁₃-Alkyl, oder C₅- oder C₆-Cycloalkyl oder Polycycloalkyl mit 6 bis 13 C-Atomen, die durch eine oder zwei C₁-C₄-Alkylgruppen substituiert sein können,
   R₂ Wasserstoff oder C₁-C₆-Alkyl und
   R₃ C₁-C₁₁-Alkylen in gerader oder verzweigter Kette bedeuten,
   enthält, mit den Maßgaben, dass
c) das Wärmeträgerkonzentrat nach der Testmethode OECD 301 A biologisch gut abbaubar ("ready degradable") ist,
d) das Wärmeträgerkonzentrat nach der Testmethode OECD 311 eine anaerobe biologische Abbaubarkeit von mindestens 75% aufweist,
e) der Korrosionsinhibitor oder sämtliche eingesetzten Korrosionsinhibitoren nach OECD 301 A (für wasserlösliche Korrosionsinhibitoren) bzw. OECD 301 B (für schlecht wasserlösliche Korrosionsinhibitoren) biologisch gut abbaubar ("ready degradable") sind.

Ein weiterer Gegenstand der Erfindung ist ein Verfahren zum Betrieb einer oberflächennahen, geothermischen Anlage, in dem die erfindungsgemäße Wärmeträgerflüssigkeit die Übertragung von Wärmeenergie bewirkt.

Vorzugsweise sind die Bestandteile a) und b) jeder für sich biologisch gut abbaubar.

Der Begriff "triazolfrei" bedeutet, dass Triazole nicht in nachweisbaren Mengen vorhanden sind.

In der erfindungsgemäßen Verwendung und der erfindungsgemäßen Wärmeträgerflüssigkeit ist der Anteil des Wassers in bevorzugter Ausführungsform ad 100 Gew.-%.

Enthält das erfindungsgemäße Wärmeträgerkonzentrat weitere Bestandteile außer Komponente a) und Komponente b), so erfüllen alle Einzelkomponenten, die in einer Konzentration von > 0,02 Gew.-% enthalten sind, die Maßgabe der biologischen Abbaubarkeit.

Die biologische Abbaubarkeit der erfindungsgemäßen Zusammensetzung und ihrer Bestandteile wird nach den OECD Guidelines for Testing of Chemicals 301 und 311 festgestellt.

Das erfindungsgemäße Wärmeträgerkonzentrat und die erfindungsgemäße Wärmeträgerflüssigkeit sind nach der Testmethode OECD 301 A in der Fassung vom 17.07.1992 biologisch gut abbaubar ("ready degradable"). Die Testmethode OECD 301 A ist auf das erfindungsgemäße Wärmeträgerkonzentrat und die erfindungsgemäße Wärmeträgerflüssigkeit anwendbar, da beide wasserlöslich sind. Die gute biologische Abbaubarkeit wird in Ziffer 10 der OECD 301 definiert.

Das erfindungsgemäße Wärmeträgerkonzentrat und die erfindungsgemäße Wärmeträgerflüssigkeit weisen nach der Testmethode OECD 311 in der Fassung vom 23.03.2006 eine anaerobe biologische Abbaubarkeit von mindestens 75 %, vorzugsweise mindestens 80 %, auf.

Der Korrosionsinhibitor oder, wenn mehr als ein Korrosionsinhibitor verwendet wird, sämtliche eingesetzten Korrosionsinhibitoren, sind nach nach der jeweils anwendbaren Testmethode OECD 301 A (für wasserlösliche Korrosionsinhibitoren) oder OECD 301 B (für schlecht wasserlösliche Korrosionsinhibitoren), jeweils in der Fassung vom 17.07.1992, biologisch gut abbaubar ("ready degradable"). Die gute biologische Abbaubarkeit wird in Ziffer 10 der OECD 301 definiert.

In einer bevorzugten Ausführungsform enthalten das erfindungsgemäße Wärmeträgerkonzentrat oder die erfindungsgemäße Wärmeträgerflüssigkeit Natron- oder Kalilauge zur Einstellung eines pH Wertes von 7,0 bis 11,4, oder dieser Wert wird bei der erfindungsgemäßen Verwendung eingestellt. Dies dient z. B. zur Neutralisation von gegebenenfalls vorhandenen organischen Säuren und als so genannte Reservealkalität, d. h. Pufferkapazität, die eine Absenkung des pH-Wertes aufgrund von oxidativen Glykolabbauprodukten verhindert.

Der Anteil des Bestandteils a) am Wärmeträgerkonzentrat liegt vorzugsweise zwischen 92 und 97 Gew.-%, insbesondere zwischen 93 und 95 Gew.-%.

Der Anteil des Korrosionsinhibitors b) am Wärmeträgerkonzentrat liegt vorzugsweise zwischen 2 und 7 Gew.-%, insbesondere zwischen 5 und 7 Gew.-%.

Eine besonders bevorzugte Ausführungsform der Erfindung sind Wärmeträgerflüssigkeiten, enthaltend
a) 20 bis 40 Gew.-% mindestens eines Frostschutzadditivs ausgewählt aus C₂- bis C₃-Alkylenglykol, C₂- bis C₃-Polyalkylenglykol und Glycerin
b) 0,2 bis 3,2 Gew.-% mindestens eines Korrosionsinhibitors, worin der Korrosionsinhibitor ein Alkalimetall-, Erdalkalimetall- oder Aminsalz einer Verbindung der Formel 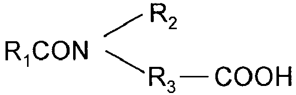 ist, wobei
   R₁ verzweigtes C₆-C₁₃-Alkyl, oder C₅- oder C₆-Cycloalkyl oder Polycycloalkyl mit 6 bis 13 C-Atomen, die durch eine oder zwei C₁-C₄-Alkylgruppen substituiert sein können,
   R₂ Wasserstoff oder C₁-C₆-Alkyl und
   R₃ C₁-C₁₁-Alkylen in gerader oder verzweigter Kette bedeuten,
   und
c) 66,8 bis 78,8 Gew.-% Wasser,
und ihre Verwendung in oberflächennahen, geothermischen Anlagen.

Korrosionsinhibitoren sind Alkalimetall-, Erdalkalimetall- oder Aminsalze einer Verbindung der Formel 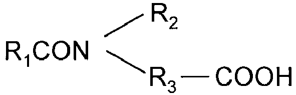 wobei
R₁ verzweigtes C₆-C₁₃-Alkyl, oder C₅- oder C₆-Cycloalkyl oder Polycycloalkyl mit 6 bis 13 C-Atomen, die durch eine oder zwei C₁-C₄-Alkylgruppen substituiert sein können,
R₂ Wasserstoff oder C₁-C₆-Alkyl und
R₃ C₁-C₁₁-Alkylen in gerader oder verzweigter Kette bedeuten.

### Beispiele

Gemäß der Norm ASTM D 1384 wurden die Korrosionsabträge von wässrigen Gemischen der beschriebenen Additive getestet. Da in oberflächennahen, geothermischen Anlagen die Einsatztemperaturen des Wärmeträgers normalerweise zwischen -20 °C und +20 °C liegen, wurde der ASTM D 1384 Test modifiziert und eine Testtemperatur von +50 °C verwendet (laut ASTM D 1384 werden +88 °C verwendet). Ansonsten waren die Testbedingungen unverändert.

Dabei werden sechs verschiedene Metalle in den entsprechenden Wärmeträger eingetaucht und zwei Wochen bei +50 °C im Beisein von aggressiven Ionen (z. B. Chlorid) und Sauerstoff, gelagert. Anhand des Massenverlustes der Metalle kann der Korrosionsschutz bewertet werden.

### Folgende Korrosionsinhibitoren wurden verwendet:

### Inhibitor X:

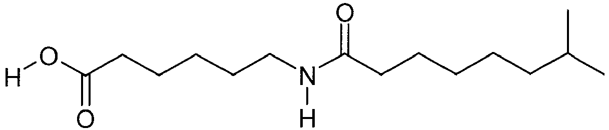

| | |
|---|---|
| Inhibitor A: | Isononansäure |
| Inhibitor B: | 2-Ethylhexansäure (Vergleich) |
| Inhibitor C: | Sebacinsäure (Vergleich) |
| Inhibitor D: | Triethanolamin (Vergleich) |

**Tabelle 1: Biologische Abbaubarkeit der Bestandteile von Wärmeträgerflüssigkeiten**

| | Testmethode | Abbaubarkeit | Bewertung der Abbaubarkeit | Quelle |
|---|---|---|---|---|
| 1,2-Propylenglykol | OECD 301A | >70% | gut | Sicherheitsdatenblatt des Herstellers |
| Inhibitor X | OECD 301 B | > 90 % (15d) | gut | Sicherheitsdatenblatt des Herstellers |
| Inhibitor A | OECD 301 B | ca. 63 % (25d) | mäßig abbaubar | Sicherheitsdatenblatt des Herstellers |
| Inhibitor B | OECD 301 B | ca. 90 % (25d) | gut | Sicherheitsdatenblatt des Herstellers |
| Inhibitor C | OECD 301 B | > 80 % (25d) | gut | eigene Messung |
| Inhibitor D | OECD 301A | > 80 % (25d) | gut | Sicherheitsdatenblatt des Herstellers |
| Benztriazol | 301D | 0 % (28d) | nicht abbaubar | Forschungsbericht 200 24 233 UBA-FB 000298 |
| | 302B | 12 % (28d) | nicht abbaubar | |

**Tabelle 2: Wärmeträgerzusammensetzungen**

| | Beispiel | | | | | |
|---|---|---|---|---|---|---|
| | 1 (V) | 2 | 3 (V) | 4 (V) | 5 (V) | 6 (V) |
| ASTM-Wasser | 66,7 | 66,7 | 66,7 | 66,7 | 66,7 | 66,7 |
| 1,2-Propylenglykol | 33,3 | 32,0 | 32,6 | 31,3 | 31,8 | 32,3 |
| Inhibitor X | - | 1,3 | - | - | - | - |
| Inhibitor A | - | - | 0,7 | - | - | - |
| Inhibitor B | - | - | - | 2,0 | - | - |
| Inhibitor C | - | - | - | - | 1,5 | - |
| Inhibitor D | - | - | - | - | - | 1,0 |
| Summe [%] | 100 | 100 | 100 | 100 | 100 | 100 |
| Abbaubarkeit | gut | gut | gut | gut | gut | gut |

Es wurden folgende Ergebnisse für die Korrosivität erhalten:

**Tabelle 3: Korrosion von Metallen in g/m², geprüft nach modifizierter ASTM D 1384 (336 h/50 °C, 6 I Luft/h)**

| | | Wärmeträger aus Beispiel | | | | | | Limits nach ASTM D 3306* |
|---|---|---|---|---|---|---|---|---|
| | | 1 (V) | 2 | 3 (V) | 4 (V) | 5 (V) | 6 (V) | |
| Kupfer | (Cu) | -0,3 | - 1,2 | - 1,7 | -2,6 | - 1,8 | - 2,5 | - 10 |
| Weichlot | (WL 30) | -123 | -6,0 | - 0,7 | - 5,5 | - 10,8 | - 8,8 | - 30 |
| Messing | (MS 63) | -0,4 | -0,9 | - 1,3 | - 1,8 | - 1,5 | - 2,9 | - 10 |
| Stahl | (CK 22) | - 88 | -0,3 | - 0,8 | -2,8 | -0,6 | - 1,5 | - 10 |
| Gusseisen | (GG 25) | -153 | - 0,8 | -0,3 | -9,2 | -2,8 | -3,7 | - 10 |
| Aluminiumguss | (AlSi₆Cu₃) | -37 | -12 | -23 | -28 | -15 | -13 | - 30 |

| | | | | | | | | |
|---|---|---|---|---|---|---|---|---|
| * Ein guter Korrosionsschutz ist gegeben, wenn die gemessenen Werte sich unterhalb der vorgegebenen Limits (nach ASTM D3306) befinden. | | | | | | | | |

## Patentansprüche

1. Verwendung einer triazolfreien Zusammensetzung, die neben Wasser
a) 9,2 bis 49,5 Gew.-% mindestens eines C₂- bis C₃-Alkylenglykols, eines C₂- is C₃-Polyalkylenglykols oder Glycerin,
b) 0,1 bis 4 Gew.-% mindestens eines Korrosionsinhibitorsenthält, worin der Korrosionsinhibitor ein Alkalimetall-, Erdalkalimetall- oder Aminsalz einer Verbindung der Formel 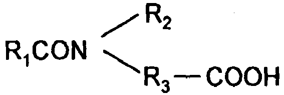 ist, wobei
R₁ verzweigtes C₆-C₁₃-Alkyl, oder C₅- oder C₆-Cycloalkyl oder Polycycloalkyl mit 6 bis 13 C-Atomen, die durch eine oder zwei C₁-C₄-Alkylgruppen substituiert sein können,
R₂ Wasserstoff oder C₁-C₆-Alkyl und
R₃ C₁-C₁₁-Alkylen in gerader oder verzweigter Kette bedeuten,
mit den Maßgaben, dass
c) die Zusammensetzung nach der Testmethode OECD 301 A biologisch gut abbaubar ("ready degradable") ist,
d) die Zusammensetzung nach der Testmethode OECD 311 eine anaerobe biologische Abbaubarkeit von mindestens 75 % aufweist,
e) der Korrosionsinhibitor oder sämtliche eingesetzten Korrosionsinhibitoren nach OECD 301 A (für wasserlösliche Korrosionsinhibitoren) bzw. OECD 301 B (für schlecht wasserlösliche Korrosionsinhibitoren) biologisch gut abbaubar ("ready degradable") sind, in oberflächennahen, geothermischen Anlagen als Wärmeträgerflüssigkeit.

2. Verwendung nach Anspruch 1, **gekennzeichnet durch** einen Gehalt an Korrosionsinhibitoren von 2 bis 7 Gew.-%.

3. Verwendung nach Anspruch 1 und/oder 2, worin der pH-Wert zwischen 7,0 und 11,4 liegt.

4. Triazolfreie Wärmeträgerflüssigkeit für oberflächennahe, geothermische Anlagen, enthaltend Wasser und
a) 9,2 bis 49,5 Gew.-% mindestens eines C₂- bis C₃-Alkylenglykols, eines C₂- bis C₃-Polyalkylenglykols oder Glycerin,
b) 0,1 bis 4 Gew.-% mindestens eines Korrosionsinhibitors, worin der Korrosionsinhibitor ein Alkalimetall-, Erdalkalimetall- oder Aminsalz einer Verbindung der Formel 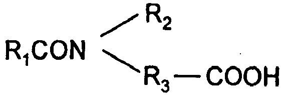 ist, wobei
R₁ verzweigtes C₆-C₁₃-Alkyl, oder C₅- oder C₆-Cycloalkyl oder Polycycloalkyl mit 6 bis 13 C-Atomen, die durch eine oder zwei C₁-C₄-Alkylgruppen substituiert sein können,
R₂ Wasserstoff oder C₁-C₆-Alkyl und
R₃ C₁-C₁₁-Alkylen in gerader oder verzweigter Kette bedeuten,
mit den Maßgaben, dass
c) die Wärmeträgerflüssigkeit nach der Testmethode OECD 301 A biologisch gut abbaubar ("ready degradable") ist,
d) die Wärmeträgerflüssigkeit nach der Testmethode OECD 311 eine anaerobe biologische Abbaubarkeit von mindestens 75 % aufweist,
e) der Korrosionsinhibitor oder sämtliche eingesetzten Korrosionsinhibitoren nach OECD 301 A (für wasserlösliche Korrosionsinhibitoren) bzw. OECD 301 B (für schlecht wasserlösliche Korrosionsinhibitoren) biologisch gut abbaubar ("ready degradable") sind.

5. Wärmeträgerflüssigkeit nach Anspruch 4, worin
a) 20 bis 40 Gew.-% mindestens eines Frostschutzadditivs ausgewählt aus C₂- bis C₃-Alkylenglykol, C₂- bis C₃-Polyalkylenglykol und Glycerin,
b) 0,2 bis 3,2 Gew.-% mindestens eines Korrosionsinhibitors und
c) 66,8 bis 78,8 Gew.-% Wasser
enthalten sind.

6. Triazolfreies Wärmeträgerkonzentrat für die Herstellung einer Wärmeträgerflüssigkeit, welches
a) 92,4 bis 98,9 Gew.-% mindestens einen C₂- bis C₃-Alkylenglykols, einen C₂- bis C₃-Polyalkylenglykols oder Glycerin,
b) 1,1 bis 7,6 Gew.-% mindestens eines Korrosionsinhibitors, worin der Korrosionsinhibitor ein Alkalimetall-, Erdalkalimetall- oder Aminsalz einer Verbindung der Formel 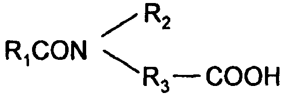 ist, wobei
R₁ verzweigtes C₆-C₁₃-Alkyl, oder C₅- oder C₆-Cycloalkyl oder Polycycloalkyl mit 6 bis 13 C-Atomen, die durch eine oder zwei C₁-C₄-Alkylgruppen substituiert sein können,
R₂ Wasserstoff oder C₁-C₆-Alkyl und
R₃ C₁-C₁₁-Alkylen in gerader oder verzweigter Kette bedeuten,
enthält, mit den Maßgaben, dass
c) das Wärmeträgerkonzentrat nach der Testmethode OECD 301 A biologisch gut abbaubar ("ready degradable") ist,
d) das Wärmeträgerkonzentrat nach der Testmethode OECD 311 eine anaerobe biologische Abbaubarkeit von mindestens 75 % aufweist,
e) der Korrosionsinhibitor oder sämtliche eingesetzten Korrosionsinhibitoren nach OECD 301 A (für wasserlösliche Korrosionsinhibitoren) bzw. OECD 301 B (für schlecht wasserlösliche Korrosionsinhibitoren) biologisch gut abbaubar ("ready degradable") sind.

## Claims

1. The use of a triazole-free composition which, as well as water, comprises
a) 9.2 to 49.5% by weight of at least one C₂- to C₃-alkylene glycol, of a C₂- to C₃-polyalkylene glycol or glycerol,
b) 0.1 to 4% by weight of at least one corrosion inhibitor, in which the corrosion inhibitor is an alkali metal, alkaline earth metal or amine salt of a compound of the formula 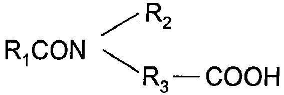 where
R₁ is branched C₆-C₁₃-alkyl, or C₅- or C₆-cycloalkyl or polycycloalkyl having 6 to 13 carbon atoms, which may be substituted by one or two C₁-C₄-alkyl groups,
R₂ is hydrogen or C₁-C₆-alkyl and
R₃ is C₁-C₁₁-alkylene in a straight or branched chain,
with the provisos that
c) the composition has good biodegradability (is "readily degradable") according to test method OECD 301 A,
d) the composition has an anaerobic biodegradability of at least 75% according to test method OECD 311,
e) the corrosion inhibitor or all corrosion inhibitors used have good biodegradability (are "readily degradable") according to OECD 301 A (for water-soluble corrosion inhibitors) or OECD 301 B (for sparingly water-soluble corrosion inhibitors), as a heat transfer fluid in near-surface geothermal installations.

2. The use as claimed in claim 1, **characterized by** a content of corrosion inhibitors of 2 to 7% by weight.

3. The use as claimed in claim 1 and/or 2, in which the pH is between 7.0 and 11.4.

4. A triazole-free heat transfer fluid for near-surface geothermal installations, comprising water and
a) 9.2 to 49.5% by weight of at least one C₂- to C₃-alkylene glycol, of a C₂- to C₃-polyalkylene glycol or glycerol,
b) 0.1 to 4% by weight of at least one corrosion inhibitor, in which the corrosion inhibitor is an alkali metal, alkaline earth metal or amine salt of a compound of the formula 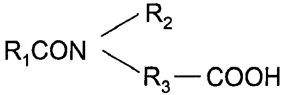 where
R₁ is branched C₆-C₁₃-alkyl, or C₅- or C₆-cycloalkyl or polycycloalkyl having 6 to 13 carbon atoms, which may be substituted by one or two C₁-C₄-alkyl groups,
R₂ is hydrogen or C₁-C₆-alkyl and
R₃ is C₁-C₁₁-alkylene in a straight or branched chain,
with the provisos that
c) the heat transfer fluid has good biodegradability (is "readily degradable") according to test method OECD 301 A,
d) the heat transfer fluid has an anaerobic biodegradability of at least 75% according to test method OECD 311,
e) the corrosion inhibitor or all corrosion inhibitors used have good biodegradability (are "readily degradable") according to OECD 301 A (for water-soluble corrosion inhibitors) or OECD 301 B (for sparingly water-soluble corrosion inhibitors).

5. The heat transfer fluid as claimed in claim 4, in which
a) 20 to 40% by weight of at least one antifreeze additive selected from C₂- to C₃-alkylene glycol, C₂- to C₃-polyalkylene glycol and glycerol,
b) 0.2 to 3.2% by weight of at least one corrosion inhibitor and
c) 66.8 to 78.8% by weight of water
are present.

6. A triazole-free heat transfer concentrate for the production of a heat transfer fluid, said concentrate comprising
a) 92.4 to 98.9% by weight of at least one C₂- to C₃-alkylene glycol, a C₂- to C₃-polyalkylene glycol or glycerol,
b) 1.1 to 7.6% by weight of at least one corrosion inhibitor, in which the corrosion inhibitor is an alkali metal, alkaline earth metal or amine salt of a compound of the formula 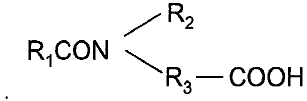 where
R₁ is branched C₆-C₁₃-alkyl, or C₅- or C₆-cycloalkyl or polycycloalkyl having 6 to 13 carbon atoms, which may be substituted by one or two C₁-C₄-alkyl groups,
R₂ is hydrogen or C₁-C₆-alkyl and
R₃ is C₁-C₁₁-alkylene in a straight or branched chain,
with the provisos that
c) the heat transfer concentrate has good biodegradability (is "readily degradable") according to test method OECD 301 A,
d) the heat transfer concentrate has an anaerobic biodegradability of at least 75% according to test method OECD 311,
e) the corrosion inhibitor or all corrosion inhibitors used have good biodegradability (are "readily degradable") according to OECD 301 A (for water-soluble corrosion inhibitors) or OECD 301 B (for sparingly water-soluble corrosion inhibitors).

## Revendications

1. Utilisation d'une composition sans triazoles qui, outre de l'eau, contient :
a) 9,2 à 49,5 % en poids d'au moins un alkylène glycol en C₂ à C₃, d'un polyalkylène glycol en C₂ à C₃ ou de glycérine,
b) 0,1 à 4 % en poids d'au moins un inhibiteur de corrosion, l'inhibiteur de corrosion étant un sel de métal alcalin, de métal alcalino-terreux ou d'amine d'un composé de formule 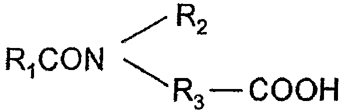 dans laquelle
R₁ signifie alkyle en C₆-C₁₃ ramifié ou cycloalkyle en C₅ ou C₆ ou polycycloalkyle de 6 à 13 atomes C, qui peuvent être substitués par un ou deux groupes alkyle en C₁-C₄,
R₂ signifie hydrogène ou alkyle en C₁-C₆, et
R₃ signifie alkylène en C₁-C₁₁ à chaîne linéaire ou ramifiée,
à condition que
c) la composition soit facilement biodégradable (« ready degradable ») selon la méthode d'essais de l'OCDE 301 A,
d) la composition présente une biodégradabilité anaérobie d'au moins 75 % selon la méthode d'essais de l'OCDE 311,
e) l'inhibiteur de corrosion ou tous les inhibiteurs de corrosion utilisés soient facilement biodégradables (« ready degradable ») selon OCDE 301 A (pour les inhibiteurs de corrosion solubles dans l'eau) ou OCDE 301 B (pour les inhibiteurs de corrosion difficilement solubles dans l'eau),
dans des installations géothermique proches de la surface en tant que liquide caloporteur.

2. Utilisation selon la revendication 1, **caractérisée par** une teneur en inhibiteurs de corrosion de 2 à 7 % en poids.

3. Utilisation selon la revendication 1 et/ou 2, dans laquelle le pH est compris entre 7,0 et 11,4.

4. Liquide caloporteur sans triazoles pour installations géothermiques proches de la surface, contenant de l'eau et
a) 9,2 à 49,5 % en poids d'au moins un alkylène glycol en C₂ à C₃, d'un polyalkylène glycol en C₂ à C₃ ou de glycérine,
b) 0,1 à 4 % en poids d'au moins un inhibiteur de corrosion, l'inhibiteur de corrosion étant un sel de métal alcalin, de métal alcalino-terreux ou d'amine d'un composé de formule 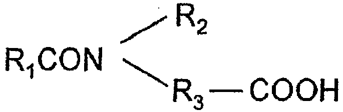 dans laquelle
R₁ signifie alkyle en C₆-C₁₃ ramifié ou cycloalkyle en C₅ ou C₆ ou polycycloalkyle de 6 à 13 atomes C, qui peuvent être substitués par un ou deux groupes alkyle en C₁-C₄,
R₂ signifie hydrogène ou alkyle en C₁-C₆, et
R₃ signifie alkylène en C₁-C₁₁ à chaîne linéaire ou ramifiée,
à condition que
c) le liquide caloporteur soit facilement biodégradable (« ready degradable ») selon la méthode d'essais de l'OCDE 301 A,
d) le liquide caloporteur présente une biodégradabilité anaérobie d'au moins 75 % selon la méthode d'essais de l'OCDE 311,
e) l'inhibiteur de corrosion ou tous les inhibiteurs de corrosion utilisés soient facilement biodégradables (« ready degradable ») selon OCDE 301 A (pour les inhibiteurs de corrosion solubles dans l'eau) ou OCDE 301 B (pour les inhibiteurs de corrosion difficilement solubles dans l'eau).

5. Liquide caloporteur selon la revendication 4, dans lequel
a) 20 à 40 % en poids d'au moins un additif antigel choisi parmi un alkylène glycol en C₂ à C₃, un polyalkylène glycol en C₂ à C₃ et la glycérine,
b) 0,2 à 3,2 % en poids d'au moins un inhibiteur de corrosion et
c) 66,8 à 78,8 % en poids d'eau,
sont contenus.

6. Concentré de caloporteur sans triazoles pour la fabrication d'un liquide caloporteur, qui contient
a) 92,4 à 98,9 % en poids d'au moins un alkylène glycol en C₂ à C₃, d'un polyalkylène glycol en C₂ à C₃ ou de glycérine,
b) 1,1 à 7,6 % en poids d'au moins un inhibiteur de corrosion, l'inhibiteur de corrosion étant un sel de métal alcalin, de métal alcalino-terreux ou d'amine d'un composé de formule 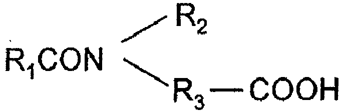 dans laquelle
R₁ signifie alkyle en C₆-C₁₃ ramifié ou cycloalkyle en C₅ ou C₆ ou polycycloalkyle de 6 à 13 atomes C, qui peuvent être substitués par un ou deux groupes alkyle en C₁-C₄,
R₂ signifie hydrogène ou alkyle en C₁-C₆, et
R₃ signifie alkylène en C₁-C₁₁ à chaîne linéaire ou ramifiée,
à condition que
c) le concentré de caloporteur soit facilement biodégradable (« ready degradable ») selon la méthode d'essais de l'OCDE 301 A,
d) le concentré de caloporteur présente une biodégradabilité anaérobie d'au moins 75 % selon la méthode d'essais de l'OCDE 311,
e) l'inhibiteur de corrosion ou tous les inhibiteurs de corrosion utilisés soient facilement biodégradables (« ready degradable ») selon OCDE 301 A (pour les inhibiteurs de corrosion solubles dans l'eau) ou OCDE 301 B (pour les inhibiteurs de corrosion difficilement solubles dans l'eau).
